(19)

Europäisches Patentamt
European Patent Office
Office européen des brevets

(11) **EP 1 901 514 A1**

(12) **EUROPEAN PATENT APPLICATION**

(43) Date of publication:
**19.03.2008 Bulletin 2008/12**

(51) Int Cl.:
***H04L 27/36*** *(2006.01)*

(21) Application number: **07116055.0**

(22) Date of filing: **10.09.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **12.09.2006 FR 0653676**

(71) Applicant: **Alcatel Lucent
75008 Paris (FR)**

(72) Inventors:
• **Clerino, Antoine
31600, SEYSSES (FR)**
• **Peyrotte, Christian
31100, TOULOUSE (FR)**

(74) Representative: **Hedarchet, Stéphane et al
Compagnie Financiere Alcatel-Lucent
54, rue La Boétie
75008 Paris (FR)**

(54) **MODULATION QUALITY TESTING DEVICE**

(57) A device (D) is dedicated to testing the quality of the modulation effected by a digital modulator (MR) having inputs responsible for receiving periodic bit streams associated with a clock signal (H) and an output responsible for delivering a carrier modulated in phase and in quadrature respectively by the first and second bit streams. This test device (D) comprises i) generator means (MG) adapted to generate the clock signal (H) and sets of chosen test bit streams each adapted to establish in the digital modulator (MR) a set of at least two amplitude/phase plots of the modulation, ii) spectrum analyzer means (MA) responsible for transforming into a spectrum of lines each carrier modulated with the test sets and delivered by the output of the digital modulator (MR), and iii) processor means (MT) responsible for determining the relative power of certain chosen spectrum lines of each spectrum of lines and for deducing from those relative powers estimates of errors of said modulation.

The main use concerns the calibration of a QPSK modulator.

FIG.1

**Description**

The invention concerns digital signal modulators, and more precisely testing for modulation errors introduced by such modulators.

Remember firstly that a modulation is defined in particular by so-called "amplitude/phase" plots, the number of which varies as a function of the modulation type (for example two in the case of BPSK modulation, four in the case of QPSK modulation or eight in the case of 8PSK modulation). These plots, generally represented by vectors, must be matched with each other, i.e. must have an optimum relative phase and relative amplitude (for example the same amplitude and a phase difference of 180° between two BPSK modulation plots or the same amplitude and a phase difference of 45° between two successive plots in 8PSK modulation). The invention is not limited to the modulation types cited above. In fact it concerns other types of modulation, for example QAM modulation (non-unitary relative amplitude plots) or BOC modulation as used for GALILEO.

As the person skilled in the art is aware, digital modulators rarely being perfect, they must be tested during the adjustment phase and/or when testing the performance of the equipment of which they form part. This testing consists in determining one or more types of modulation error.

Here "modulation errors" means:

■ "amplitude/phase plot matching" errors, or
■ time offset errors between quadrature (Q) and in-phase (I) modulation channels, known as "skew", or
■ data or code asymmetry errors, i.e. a lack of symmetry between bit rise times and fall times.

Also, "amplitude/phase plot matching error" here means an error (or an unintentional difference) of the amplitude ratio between two plots and/or an error (or an unintentional difference) of the phase difference between two plots.

The testing is usually effected in the laboratory using a network analyzer coupled momentarily to the digital modulator. Now, in some applications, for example if the digital modulator is on board a spacecraft (such as a probe or a telecommunication or navigation or observation satellite, for example), it can prove important, or even essential, to test the quality of the modulation that it produces during a mission. Such tests could be carried out in the mission ground segment by a station receiving the modulated signal transmitted from space, but the crossing of the ionosphere and various sources of noise (such as the carrier phase and thermal noise, for example) degrade the signal to be observed in ways that are difficult to separate from actual modulation errors. Moreover, such remote testing cannot be envisaged for spacecraft that require an autonomous performance test system, as is envisaged for some future versions of the GALILEO satellite navigation system, for example.

An object of the invention is therefore to improve on the situation.

To this end it proposes a device for testing the quality of the modulation effected by a digital modulator having inputs responsible for receiving periodic bit streams associated with a clock signal and an output responsible for delivering a carrier modulated in phase (I) and in quadrature (Q) respectively by the first and second bit streams.

This test device is characterized in that it comprises:

- generator means adapted to generate the clock signal and sets of chosen test bit streams (each adapted to establish in the digital modulator a set of at least two amplitude/phase plots of the modulation),
- spectrum analyzer means responsible for transforming into a spectrum of lines each carrier modulated with the test sets and delivered by the output of the digital modulator, and
- processor means responsible for determining the relative power of certain chosen spectrum lines of each spectrum of lines and for deducing from those relative powers estimates of modulation errors.

The device of the invention may have other features and in particular, separately or in combination:

- its processor means can be responsible for estimating a matching error between two amplitude/phase plots of the modulation by determining upper bounds of matching error parameters as functions of the power ratio between at least two predetermined (or chosen) spectrum lines, or more, of the same spectrum;
- its generator means can be responsible for successively generating N sequences consisting of periodic series of different sets (each for establishing at least two plots); in this case its processor means can be responsible for determining the relative power of certain predetermined spectrum lines (or combinations of spectrum lines) of the spectrum of lines resulting from each of the N sequences and for deducing from the relative powers so determined for the N successive sequences estimates of modulation errors; N is a function of the number of amplitude/phase plots of said modulation;
- its processor means can be responsible for determining, for each combination of at least two different amplitude/phase plots of the N sequences, the upper bounds of matching error parameters as functions of the power ratio between at least two chosen spectrum lines in the spectrum resulting from the sequence corresponding to the combination, and for deducing from those matching error parameter upper bounds estimates of matching errors between the amplitude/phase plots of each combination, and then for all the plots with each other;

- in the case of a BPSK type modulation defined by two amplitude/phase plots, the generator means can be responsible for generating a single periodic sequence associated with a single possible combination of two different amplitude/phase plots (i.e. N=1), and the processor means are responsible for establishing the upper bounds of matching error parameters as functions of the power ratio between predetermined spectrum lines in the spectrum resulting from the sequence that corresponds to the combination;
- in the case of a QPSK type modulation defined by four amplitude/phase plots, the generator means can be responsible for generating at least three (N≥3) different sequences of periodic series of at least two sets adapted to establish different amplitude/phase plots;
- its generator means can be responsible for generating three (N=3) different sequences: a first sequence of periodic series of sets adapted to establish a first amplitude/phase plot (V0) and a third amplitude/phase plot (V2), a second sequence of periodic series of sets adapted to establish a second amplitude/phase plot (V1) and a fourth amplitude/phase plot (V3), and a third sequence of periodic series of sets adapted to establish said first amplitude/phase plot (V0), said second amplitude/phase plot (V1), said third amplitude/phase plot (V2) and said fourth amplitude/phase plot (V3).
- its processor means can be responsible for determining i) the relative powers of two spectrum lines of the spectrum resulting from the first sequence and corresponding to the frequencies 0 and 1/2T, where T is the timing rate of the clock, ii) the relative powers of two spectrum lines of the spectrum resulting from the second sequence and corresponding to the frequencies 0 and 1/2T, and iii) the relative powers of two spectrum lines of the spectrum resulting from said third sequence and corresponding to the frequencies -1/4T and 1/4T.
- alternatively:

- its generator means can be responsible for generating four (N=4) different sequences, a first sequence of periodic series of sets adapted to establish a first amplitude/phase plot (V0) and a third amplitude/phase plot (V2), a second sequence of periodic series of sets adapted to establish a second amplitude/phase plot (V1) and a fourth amplitude/phase plot (V3), a third sequence of periodic series of sets adapted to establish the first amplitude/phase plot (V0) and the second amplitude/phase plot (V1), and a fourth sequence of periodic series of sets adapted to establish the third amplitude/phase plot (V2) and the fourth amplitude/phase plot (V3);
- its processor means can be responsible for determining i) the relative powers of two spectrum lines of the spectrum resulting from the first sequence and corresponding to the frequencies 0 and 1/2T, where T is the timing rate of the clock, ii) the relative powers of two spectrum lines of the spectrum resulting from the second sequence and corresponding to the frequencies 0 and 1/2T, iii) the relative powers of two spectrum lines of the spectrum resulting from the third sequence and corresponding to the frequencies 0 and 1/2T, and iv) the relative powers of two spectrum lines of the spectrum resulting from the second sequence and corresponding to the frequencies 0 and 1/2T;
- the matching error parameters are, for example, the amplitude ratio and the phase difference of pairs of amplitude/phase clocks of the modulation;
- instead of or in addition to this, its processor means can be responsible for estimating a time offset error (or skew) between quadrature and in-phase modulation channels of the digital modulator from the relative powers of certain chosen spectrum lines of the spectrum of lines;
- instead of or in addition to this, its processor means can be responsible for estimating an asymmetry error between bit rise times and fall times from the relative powers of certain chosen spectrum lines of the spectrum of lines.

The invention also proposes equipment for generating modulated radio-frequency signals equipped with a digital modulator coupled to a test device of the type described hereinabove. This type of equipment constitutes a modulated radio-frequency signal transmission system, for example. This type of equipment can form part of a spacecraft, for example (such as a probe or a satellite, for example).

Other features and advantages of the invention will become apparent on reading the following detailed description and examining the appended drawings, in which:

- figure 1 shows very diagrammatically and functionally equipment for generating radio-frequency (RF) signals comprising one embodiment of a test device of the invention, coupled to a digital modulator,
- figure 2 shows very diagrammatically and functionally one embodiment of a QPSK type digital modulator,
- figure 3 is a diagram showing the four vectors representing the four nominal plots of a QPSK modulation (in dashed line) and the four real plots of that QPSK modulation in the presence of matching errors (in solid line),

- figure 4 shows diagrammatically the graphical representation of the power spectrum $\left|\widetilde{S}_{V_0V_2}\left(\dfrac{m}{2T}\right)\right|^2$,

- figure 5 shows diagrammatically the graphical representation of the power spectrum $\left|\widetilde{S}_{V_1V_3}\left(\dfrac{m}{2T}\right)\right|^2$ and,

- figure 6 shows diagrammatically the graphical representation of the power spectrum $\left|\widetilde{S}_{V_0V_1V_2V_3}\left(\dfrac{m}{4T}\right)\right|^2$.

The appended drawings can constitute part of the description of the invention as well as contributing to the definition of the invention, if necessary.

An object of the invention is to test the quality of the modulation effected by a digital modulator, including when it is being used, for example because it is on board a spacecraft executing a mission.

It is considered hereinafter by way of nonlimiting example that the digital modulator is part of equipment constituting a system for transmitting modulated radio-frequency (RF) signals. However, the invention is not limited to that type of equipment. In fact it concerns any type of equipment responsible for generating modulated radio-frequency signals and to this end comprising at least one digital modulator.

It is furthermore considered hereinafter, by way of illustrative and nonlimiting example, that the equipment comprising the digital modulator is on board a satellite navigation type spacecraft of a satellite navigation system, for example the GALILEO system. However, it could equally be on board a probe or a telecommunication or remote sensing satellite, for example, or form part of another type of craft or vehicle or a building on the ground. The invention concerns generally any digital modulator belonging to a terrestrial or space system, whatever the application (in particular telecommunications, navigation or remote sensing).

Finally, it is considered hereinafter, by way of illustrative and nonlimiting example, that the digital modulator is of the QPSK type (its modulation is therefore defined by four amplitude/phase plots). However, the invention is not limited to that type of modulator. In fact it concerns any type of digital modulator and in particular those of BPSK, QPSK, 8PSK, QAM and BOC type.

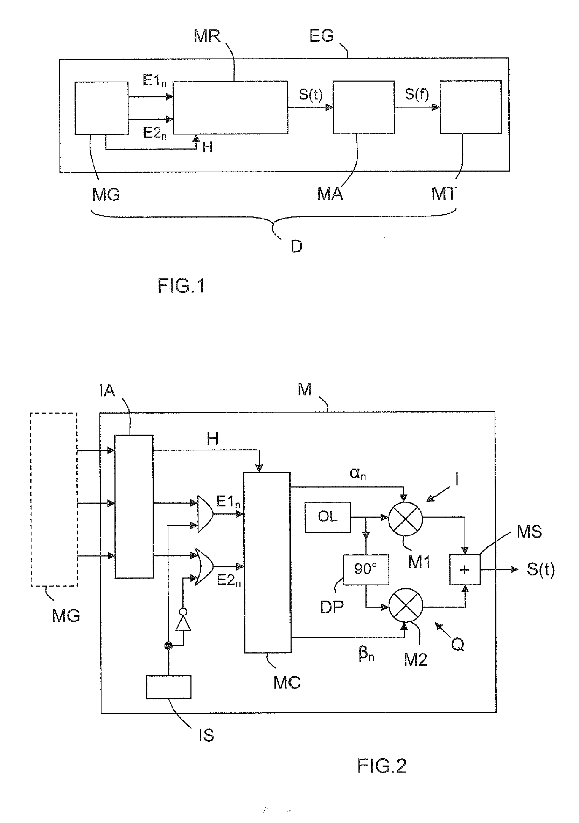

As shown diagrammatically and functionally in figure 1, the invention proposes coupling a modulation quality test device D to a (digital) modulator MR. This device D/modulator MR combination can constitute in itself equipment EG for generating radio-frequency signals, or constitute only part of such equipment.

One embodiment of a differential coding QPSK modulator MR is shown diagrammatically and functionally in figure 2. This kind of modulator MR conventionally comprises at least one differential coder module MC, a local oscillator OL, a 90° phase-shifter DP, a first multiplier M1, a second multiplier M2 and a summing unit MS.

The differential coder module MC has three inputs through which it is fed with a clock signal H (for example at 25 MHz), a first bit stream $E1_n$ and a second bit stream $E2_n$. The latter are constructed by means of logic components from set point bits coming from a specific interface IS and either test bits coming from a management module MG of the device D or data bits (to be transmitted) coming from the transmission system via an interface IA of the AMI-NRZ type, for example, which can be external to the modulator MR. It is responsible for delivering at an output a first "dynamic" bit stream $\alpha_n$ and a second dynamic bit stream $\beta_n$ constructed from a first bit stream $E1_n$ and a second bit stream $E2_n$ and the clock signal H. In fact, it transforms a static or dynamic input sequence $(E1_n, E2_n)$ into a sequence $(\alpha_n(t), \beta_n(t))$ varying at the timing rate T of the clock H, here equal to 1/25 MHz.

If $E1_n$ and $E2_n$ represent the bits at the input of the differential coder module MC and if $\alpha_n$ and $\beta_n$ designate the bits leaving the differential coder module MC at the same time $t_n$, where $t_n = nT$ (where T is the period of the clock H), then the following relations apply:

$$\alpha_n = E1_n E2_n \alpha_{n-1} + \overline{E1_n} E2_n \overline{\beta_{n-1}} + \overline{E1_n E2_n} \alpha_{n-1} + E1_n \overline{E2_n} \beta_{n-1}$$

$$\text{(1)}$$

$$\beta_n = E1_n E2_n \beta_{n-1} + \overline{E1_n} E2_n \alpha_{n-1} + \overline{E1_n E2_n} \beta_{n-1} + E1_n \overline{E2_n} \overline{\alpha_{n-1}}$$

The first multiplier M1 has a first input receiving the bits of the first dynamic stream $\alpha_n$, a second input receiving the carrier signal from the local oscillator OL, and an output delivering a phase-modulated signal. It is part of the so-called in-phase modulation channel (or I channel).

The second multiplier M2 has a first input receiving the bits of the second dynamic stream $\beta_n$, a second input receiving the carrier signal from the local oscillator OL phase-shifted 90˚ by the phase-shifter DP, and an output delivering a quadrature modulated signal. It forms part of the so-called quadrature modulation channel (or Q channel).

The carrier is in the X band (typically 8 GHz), for example.

The summing unit MS has a first input fed with the phase-modulated signal, a second input fed with the quadrature-modulated signal, and an output delivering a modulated carrier S(t) which, in the case of QPSK modulation, is defined by the following relation:

$$\underbrace{s(t)}_{\substack{Modulated \\ signal \\ (QPSK)}} = Re\left[\underbrace{\sum_{n=-\infty}^{+\infty}(\alpha_n + j\beta_n)Re\ ct_{(O,T)}(t-nT)}_{baseband\ signal} \times \underbrace{e^{j(\omega_o t + \psi_o)}}_{carrier}\right] \times \underbrace{Re\ ct_{(O,T_{obs})}\left(t - \frac{Tobs}{2}\right)}_{\substack{Observatio\ n\ time\ window\ of \\ duration\ Tobs}} \quad (2)$$

in which $\omega_o = 2\pi f_o$ and $\psi_o$ respectively designate the angular frequency and the original phase of the sinusoidal carrier wave used for the modulation (delivered by the local oscillator OL).

The above relation is founded on two hypotheses: the elementary pulse shape is rectangular and of duration T (which corresponds to a nil transition time), and the synchronization is perfect (no clock jitter on each of the I and Q modulation channels and no clock offset between the I and Q modulation channels). Given these two hypotheses, $\alpha_n$ (t) = $\alpha_n$ rect$_{(O,T)}$ (t - nT) and $\beta_n$(t) = $\beta_n$ rect$_{(O,T)}$ (t - nT), where rect$_{(O,T)}$ (u) = 1 for 0 < u < T and rect$_{(O,T)}$ (u) = 0 otherwise. The baseband modulator signal $\tilde{s}(t)$ is then written:

$$\tilde{s}(t) = \sum_{n=-\infty}^{+\infty}(\alpha_n + j\beta_n)\mathbf{Re}\ ct_{(O,T)}(t-nT).$$

The term ($\alpha_n + j\beta_n$) of the baseband signal $\tilde{s}(t)$ characterizes the amplitude/phase plot of the modulation that is occupied during the time interval [nT, (n + 1)T]. The information is contained in the phase jumps between plots since transition coding is used defined by relation (1).

As indicated hereinabove, QPSK modulation is defined by four amplitude/phase plots Vi$_n$ where in is an index that can take four values (0, 1, 2 or 3) with a sub-index n marking the time dependency. Consequently, the baseband signal $\tilde{s}(t)$ can be written:

$$\tilde{s}(t) = \sum_n V_{i_n} rect_{(O,T)}(t-nT) \quad (3)$$

A test device D of the invention comprises a generator module MG, a spectrum analyzer module MA and a processor module MT.

The generator module MG supplies the clock signal H and the test bits for constructing the sets of first and second selected test bit streams E1$_n$ and E2$_n$. Each set (E1$_n$, E2$_n$) establishes one of the modulation amplitude/phase plots.

The spectrum analyzer module MA is fed by the output of the modulator MR with the modulated carrier S(t) and is responsible for transforming the latter into a spectrum S(f) of lines.

The processor module MT is responsible for determining the relative power of certain chosen spectrum lines of each spectrum S(f) of lines and for deducing from those relative powers estimates of modulation errors.

There is described hereinafter one example of processing for estimating the matching error between modulation amplitude/phase plots Vi$_n$. However, the invention is not limited to estimating that type of error. In fact it concerns equally estimating the error in the time offset between the quadrature (Q) and in-phase (I) modulation channels, known as "skew", and estimating the asymmetry error between the bit rise and fall times. Whatever type of error is estimated, estimation is based on processing the relative powers of certain chosen spectrum lines of the spectrum of lines.

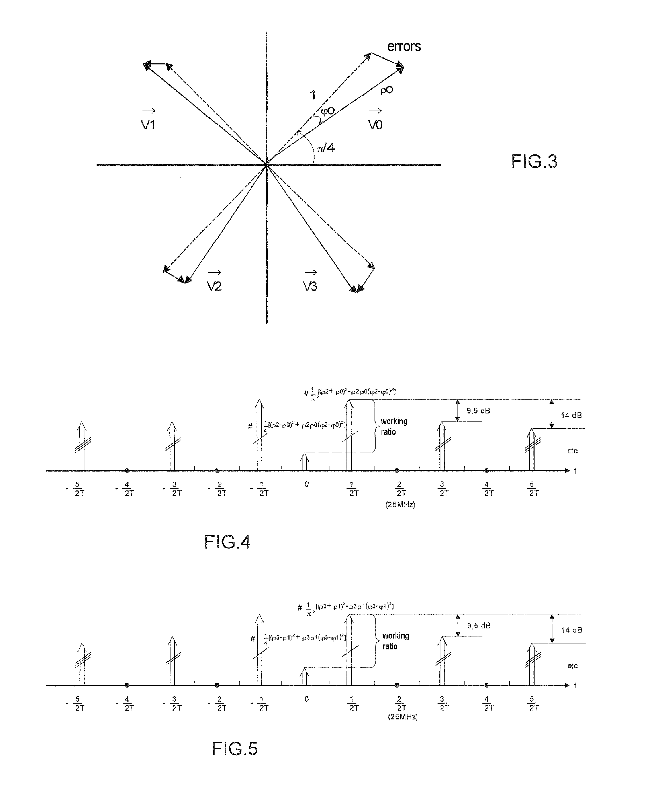

Figure 3 shows in dashed line the four vectors representing the four nominal plots of a QPSK modulation (nominal in the sense of in the absence of errors) and in solid line the four real plots V$_i$ of that QPSK modulation in the presence of matching errors, which are respectively defined by the following relations:

$$V_0 = \rho_0 e^{j\varphi_0} e^{j\frac{\pi}{4}}$$

$$V_1 = \rho_1 e^{j\varphi_1} e^{j\left(\frac{\pi}{2}+\frac{\pi}{4}\right)}$$

$$V_2 = \rho_2 e^{j\varphi_2} e^{j\left(2\frac{\pi}{2}+\frac{\pi}{4}\right)} \qquad (4)$$

$$V_3 = \rho_3 e^{j\varphi_3} e^{j\left(3\frac{\pi}{2}+\frac{\pi}{4}\right)}$$

where $\varphi i$ is a phase-shift relative to the nominal value and $\rho i$ is the nominal amplitude (with $\rho_0$ # $\rho_1$ # $\rho_2$ # $\rho_3$ # 1 (normalization to 1 without limiting the validity of the approach).

To limit the complexity of the test signal it is possible, for example, to use only static values $E1_n = E1$ and $E2_n = E2$ at the input of the differential coder module MC. However, these values are transformed into dynamic values at the output of the differential coder module MC, at the timing rate T of the clock H, as indicated hereinabove.

E1 and E2 being bits that can take the value 0 or 1, four different sets (E1, E2) can be obtained.

When (E1, E2) = (0, 0), a phase jump equal to TT is obtained and the modulator MR alternates periodically (with a period equal to 2T) between the plots $V_i$ and $V_{i+2}$ (with i = 0 or 1 according to the initialization). It is then possible to obtain either the sequence consisting of the periodic series ($V_0$, $V_2$, $V_0$, $V_2$, $V_0$,...) or the sequence consisting of the periodic series ($V_1$, $V_3$, $V_1$, $V_3$, $V_1$,...).

When (E1, E2) = (1, 1), a phase jump equal to 0 is obtained and the modulator MR is continuously on the same plot $V_i$ (i = 0 to 3), which depends on the initialization.

When (E1, E2) = (0, 1), a phase jump equal to $+\pi/2$ is obtained and the modulator MR alternates periodically (with a period equal to 4T) between the plots $V_0$, $V_1$, $V_2$ and $V_3$. The sequence consisting of the periodic series ($V_0$, $V_1$, $V_2$, $V_3$, $V_0$, $V_1$, $V_2$, $V_3$, $V_0$,...) can then be obtained.

When (E1, E2) = (1, 0), a phase jump equal to $-\pi/2$ is obtained and the modulator MR alternates periodically (with a period equal to 4T) between the plots $V_0$, $V_3$, $V_2$ and $V_1$. The sequence consisting of the periodic series ($V_0$, $V_3$, $V_2$, $V_1$, $V_0$, $V_3$, $V_2$, $V_1$, $V_0$,...) can then be obtained.

Consequently, the baseband signal $\tilde{s}(t)$ is periodic except for (E1, E2) = (1, 1), in which case it is continuous. However, in these four cases, the spectrum $\tilde{s}(f)$ of the baseband signal $\tilde{s}(t)$ is discrete, i.e. made up of spectrum lines, which simplifies the spectral power measurements and processing them to evaluate the accuracy of the amplitude/ phase plots.

Hereinafter, preference is therefore given to reasoning on the basis of the spectrum $\tilde{s}(f)$ of the baseband signal $\tilde{s}(t)$ rather than on the spectrum S(f) of the real modulated signal s(t). It can in fact be shown that the power spectrum $|S(f)|^2$ that has to be measured by the processor module MT is equal (apart from a constant and a shift in the carrier frequency) to the power spectrum $|\tilde{S}(f)|^2$ that is calculated for preference. This equivalence is caused by the fact that the modulation band is very narrow compared to the carrier frequency (for example 25 MHz compared to 8.3 GHz).

The modeling of the plots described hereinabove defines the amplitude/phase matching errors that the processor module MT must estimate by spectrum analysis.

Each of the sequences consisting of a periodic series of plots $V_i$ described hereinabove is associated with a baseband signal $\tilde{s}(t)$ and therefore a spectrum $\tilde{s}(f)$. The four continuous sequences of plots corresponding to the case (E1, E2) = (1, 1) are preferably not used if the modulator MR does not support long-term holding on the same plot or long-term alternation between two adjacent plots without distortion of the temporal signal falsifying the spectral interpretation. Moreover, the sequence of periodic series of plots $V_i$ corresponding to the case (E1, E2) = (1,0) cannot be used because it is equivalent to the temporal reverse of the sequence of periodic series of plots $V_i$ corresponding to the case (E1, E2) = (0, 1) and therefore to a redundancy of the spectrum measurements that is of no utility. Consequently, only three sequences of periodic series of plots $V_i$ are preferably retained for estimating the matching of the amplitude/ phase plots, namely:

- in the case (E1, E2) = (0, 0): ($V_0$, $V_2$, $V_0$, $V_2$, $V_0$, ...) and ($V_1$, $V_3$, $V_1$, $V_3$, $V_1$, ...) depending on the initialization, leading to the production by the modulator MR of baseband signals of period 2T denoted $\tilde{s}_{V_0V_2}(t)$ and $\tilde{s}_{V_1V_3}(t)$, and then by the spectrum analyzer module MA of spectra of lines denoted $\tilde{S}_{V_0V_2}(f)$ and $\tilde{S}_{V_1V_3}(f)$ that will then be processed by the processor module MT,

- in the case (E1, E2) = (0, 1): ($V_0$, $V_1$, $V_2$, $V_3$, $V_0$, ...) inducing production by the modulator MR of a baseband signal of period 4T denoted $\tilde{s}_{V_0V_1V_2V_3}(t)$, and then by the spectrum analyzer module MA of a spectrum of lines denoted $\tilde{S}_{V0V1V2V3}(f)$ that will then be processed by the processor module MT.

It will be noted that other sequences of periodic series of plots can be used. However, it can be shown that spectrum analysis thereof provides no information in addition to that obtained with the three sequences described hereinabove. This is the case in particular of the sequence of period 4T ($V_0$, $V_2$, $V_3$, $V_1$, $V_0$, ...) and the three sequences derived by incrementing the indices.

The baseband signal $\tilde{s}_{V_0V_2}(t)$ of period 2T, associated with the sequence ($V_0$, $V_2$, $V_0$, $V_2$, $V_0$, ...), is divisible into Fourier series the coefficients $\tilde{S}_{V_0V_2}\left(\dfrac{m}{2T}\right)$ whereof correspond to the amplitude spectrum at the discrete frequen-

cies $f = \dfrac{m}{2T}$ :

$$\tilde{S}_{V_0V_2}\left(\frac{m}{2T}\right) = \frac{1}{2T}\int_0^{2T}\tilde{s}_{V_0V_2}(t)e^{-j2\pi\frac{mt}{2T}}dt \, .$$

Knowing that over the range [0,2 T] we have:

$\tilde{s}_{V_0V_2}(t) = V_0\, \text{rect}_{(O,T)}(t) + V_2\, \text{rect}_{(O,T)}(t-T)$, where $\text{rect}_{(O,T)}(u) = 1$ for $0 < u < T$ and $\text{rect}_{(O,T)}(u) = 0$ otherwise, thus yielding:

$$\tilde{S}_{V_0V_2}\left(\frac{m}{2T}\right) = \frac{1}{2T}\left[V_0\int_0^T e^{-j2\pi\frac{mt}{2T}}dt + V_2\int_T^{2T}e^{-j2\pi\frac{mt}{2T}}dt\right],$$

which can be rewritten $\tilde{S}_{V_0V_2}\left(\dfrac{m}{2T}\right) = \dfrac{1}{2T}\left(V_0 + V_2 e^{-j\pi m}\right)\int_O^T e^{-j2\pi\frac{mt}{2T}}dt \, ,$

which is equivalent $\tilde{S}_{V_0V_2}\left(\dfrac{m}{2T}\right) = \dfrac{1}{2}\dfrac{\sin\left(\dfrac{\pi}{2}m\right)}{\left(\dfrac{\pi}{2}m\right)}\left(V_0 + V_2 e^{-j\pi m}\right)e^{-j\frac{\pi}{2}m} \, .$

The power spectrum is therefore given by the following expression:

$$\left|\tilde{S}_{V_0V_2}\left(\frac{m}{2T}\right)\right|^2 = \frac{1}{4}\frac{\sin^2\left(\dfrac{\pi}{2}m\right)}{\left(\dfrac{\pi}{2}m\right)^2}\left|V_0 + V_2 e^{-j\pi m}\right|^2 ,$$

which, given the modeling of the amplitude/phase plots $V_i$ described hereinabove (relations (4)) is rewritten as follows:

$$\left|\tilde{S}_{V_0V_2}\left(\frac{m}{2T}\right)\right|^2 = \frac{1}{4}\frac{\sin^2\left(\dfrac{\pi}{2}m\right)}{\left(\dfrac{\pi}{2}m\right)^2}\left|\rho_0 e^{j\varphi_0} - \rho_2 e^{j\varphi_2}e^{-j\pi m}\right|^2 \qquad (5).$$

It will be noted that the power of all the even spectrum lines (m = 2n), which correspond to the frequency $f = \dfrac{m}{2T}$, is nil except that at the origin (m = 0 and thus f = 0). Moreover, the expression for the power of all the odd spectrum lines (m = 2n + 1) is the same, apart from the coefficient $\dfrac{1}{m^2}$. Consequently, only the spectrum lines at f = 0 and $f = \dfrac{1}{2T}$ are useful for evaluating the errors of a QPSK modulator MR.

The power spectrum for the spectrum line of nil frequency (f = 0) is given by the relation:

$$\left|\tilde{S}_{V_0V_2}(0)\right|^2 = \frac{1}{4}\left|\rho_0 e^{j\varphi_0}-\rho_2 e^{j\varphi_2}\right|^2 = \frac{1}{4}\left(\rho_0^2+\rho_2^2-2\rho_0\rho_2\cos(\varphi_2-\varphi_0)\right) \quad (6)$$

$$\# \frac{1}{4}\left[(\rho_2-\rho_0)^2+\rho_2\rho_0(\varphi_2-\varphi_0)^2\right],$$

while the power spectrum for the spectrum line of frequency $f = \dfrac{1}{2T}$ is given by the relation:

$$\left|\tilde{S}_{V_0V_2}\left(\frac{1}{2T}\right)\right|^2 = \frac{1}{\pi^2}\left|\rho_0 e^{j\varphi_0}+\rho_2 e^{j\varphi_2}\right|^2 = \frac{1}{\pi^2}\left(\rho_0^2+\rho_2^2+2\rho_0\rho_2\cos(\varphi_2-\varphi_0)\right) \quad (7)$$

$$\# \frac{1}{\pi^2}\left[(\rho_2+\rho_0)^2-\rho_2\rho_0(\varphi_2-\varphi_0)^2\right],$$

where $\rho_i$ is the amplitude and $\varphi_i$ the phase error of the plot $V_i$.

Figure 4 shows diagrammatically a graphical representation of the power spectrum $\left|\tilde{S}_{V_0V_2}\left(\dfrac{m}{2T}\right)\right|^2$.

The baseband signal $\tilde{s}_{V_1V_3}$ (t) of period 2T, associated with the sequence (V_1, V_3, V_1, V_3, V_1, ...), is also divisible into Fourier series the coefficients $\tilde{S}_{V_1V_3}\left(\dfrac{m}{2T}\right)$ whereof correspond to the amplitude spectrum at the discrete frequencies $f = \dfrac{m}{2T}$.

Using for the calculation of $\tilde{S}_{V_1V_3}$ (f) the same approach as that described hereinabove for the calculation of $\tilde{S}_{V_0V_2}$ (f), the following expression for the power spectrum is obtained:

$$\left|\tilde{S}_{V_1V_3}\left(\frac{m}{2T}\right)\right|^2 = \frac{1}{4}\frac{\sin^2\left(\dfrac{\pi}{2}m\right)}{\left(\dfrac{\pi}{2}m\right)^2}\left|\rho_1 e^{j\varphi_1}-\rho_3 e^{j\varphi_3}e^{-j\pi m}\right|^2 \quad (8).$$

It will be noted that this expression (8) is identical to the expression (4) apart from the change of indices. The above remarks concerning the even and odd spectrum lines are therefore equally applicable here, only the spectrum lines at f = 0 and $\dfrac{1}{2T}$ are useful for evaluating the errors of the QPSK modulator MR.

The power spectrum for the spectrum line of nil frequency (f = 0) is given by the relation:

$$\left|\widetilde{S}_{V_1 V_3}(0)\right|^2 = \frac{1}{4}\left|\rho_1 e^{j\varphi_1} - \rho_3 e^{j\varphi_3}\right|^2 = \frac{1}{4}\left(\rho_1^2 + \rho_3^2 - 2\rho_1 \rho_3 \cos(\varphi_3 - \varphi_1)\right) \quad (9)$$

$$\#\ \frac{1}{4}\left[(\rho_3 - \rho_1)^2 + \rho_3 \rho_1 (\varphi_3 - \varphi_1)^2\right],$$

while the power spectrum for the spectrum line of frequency $f = \dfrac{1}{2T}$ is given by the relation:

$$\left|\widetilde{S}_{V_1 V_3}\left(\frac{1}{2T}\right)\right|^2 = \frac{1}{\pi^2}\left|\rho_1 e^{j\varphi_1} + \rho_3 e^{j\varphi_3}\right|^2 = \frac{1}{\pi^2}\left(\rho_1^2 + \rho_3^2 + 2\rho_1 \rho_3 \cos(\varphi_3 - \varphi_1)\right) \quad (10)$$

$$\#\ \frac{1}{\pi^2}\left[(\rho_3 + \rho_1)^2 - \rho_3 \rho_1 (\varphi_3 - \varphi_1)^2\right],$$

in which $\rho_i$ is the amplitude and $\varphi_i$ the phase error of the plot $V_i$.

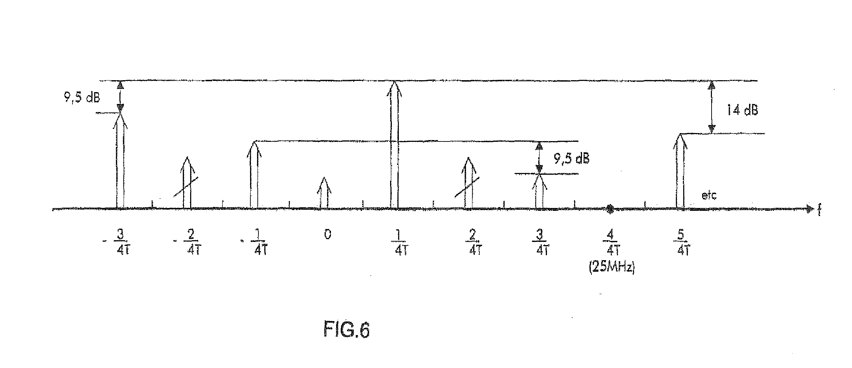

Figure 5 shows diagrammatically a graphical representation of the power spectrum $\left|\widetilde{S}_{V_1 V_3}\left(\dfrac{m}{2T}\right)\right|^2$.

The baseband signal $\widetilde{s}_{V_0 V_1 V_2 V_3}(t)$ of period 4T, associated with the sequence of interest ($V_0$, $V_1$, $V_2$, $V_3$, $V_0$, ...),

is also divisible into Fourier series the coefficients $\widetilde{S}_{V_0 V_1 V_2 V_3}\left(\dfrac{m}{4T}\right)$ whereof correspond to the amplitude spectrum at the discrete frequencies $f = \dfrac{m}{4T}$ :

$$\widetilde{S}_{V_0 V_1 V_2 V_3}\left(\frac{m}{4T}\right) = \frac{1}{4T}\int_0^{4T} \widetilde{s}_{V_0 V_1 V_2 V_3}(t) e^{-j2\pi \frac{mt}{4T}}\, dt\ .$$

Knowing that over the range [0,4T] we have:

$$\widetilde{s}_{V_0 V_1 V_2 V_3}(t) = V_0 rect_{(O,T)}(t) + V_1 rect_{(O,T)}(t - T) + V_2 rect_{(O,T)}(t - 2T) + V_3 rect_{(O,T)}(t - 3T),$$

with rect$_{(0,T)}$ (u) = 1 for 0 < u < T and rect $_{(O, T)}$ (u) = 0 otherwise, we therefore obtain:

$$\widetilde{S}_{V_0 V_1 V_2 V_3}\left(\frac{m}{4T}\right) = \frac{1}{4T}\left[V_0 \int_0^T e^{-j2\pi \frac{mt}{4T}}\, dt + V_1 \int_T^{2T} e^{-j2\pi \frac{mt}{4T}}\, dt + V_2 \int_{2T}^{3T} e^{-j2\pi \frac{mt}{4T}}\, dt + V_3 \int_{3T}^{4T} e^{-j2\pi \frac{mt}{4T}}\, dt\right]$$

which is rewritten:

$$\widetilde{S}_{V_0 V_1 V_2 V_3}\left(\frac{m}{4T}\right) = \frac{1}{4T}\left(V_0 + V_1 e^{-j\frac{\pi}{2}m} + V_2 e^{-j2\frac{\pi}{2}m} V_3 e^{-j3\frac{\pi}{2}m}\right)\int_0^T e^{-j2\pi\frac{mt}{4T}} dt ,$$

which is equivalent to:

$$\widetilde{S}_{V_0 V_1 V_2 V_3}\left(\frac{m}{4T}\right) = \frac{1}{4}\frac{\sin\left(\frac{\pi}{4}m\right)}{\left(\frac{\pi}{4}m\right)}\left(V_0 + V_1 e^{-j\frac{\pi}{2}m} + V_2 e^{-j2\frac{\pi}{2}m} + V_3 e^{-j3\frac{\pi}{2}m}\right)e^{-j\frac{\pi}{4}m} .$$

The power spectrum is therefore given by the following expression:

$$\left|\widetilde{S}_{V_0 V_1 V_2 V_3}\left(\frac{m}{4T}\right)\right|^2 = \frac{1}{16}\frac{\sin^2\left(\frac{\pi}{4}m\right)}{\left(\frac{\pi}{4}m\right)^2}\left|V_0 + V_1 e^{-j\frac{\pi}{2}m} + V_2 e^{-j2\frac{\pi}{2}m} + V_3 e^{-j3\frac{\pi}{2}m}\right|^2$$

which, given the modeling of the amplitude/phase plots $V_i$ described hereinabove (relations (4)) is rewritten:

$$\left|\widetilde{S}_{V_0 V_1 V_2 V_3}\left(\frac{m}{4T}\right)\right|^2 = \frac{1}{16}\frac{\sin^2\left(\frac{\pi}{4}m\right)}{\left(\frac{\pi}{4}m\right)^2}\left|\rho_0 e^{j\varphi_0} + j\rho_1 e^{j\varphi_1} e^{-j\frac{\pi}{2}m} - \rho_2 e^{j\varphi_2} e^{-j2\frac{\pi}{2}m} - j\rho_3 e^{j\varphi_3} e^{-j3\frac{\pi}{2}m}\right|^2 \quad (11).$$

It will be noted that the power of all the spectrum lines with index m = 4n, which correspond to the frequency $f = \dfrac{m}{4T}$, is nil except that at the origin (m = 0 and therefore f = 0). Moreover, the expression for the power of all the spectrum lines with index m = 4n + 1 is the same, apart from the coefficient $\dfrac{1}{m^2}$, exactly as for the spectrum lines with index m = 4n + 2 or 4n + 3. Consequently, only the spectrum lines at f = 0, $f = \dfrac{1}{4T}$, $f = \dfrac{2}{4T}$ and $f = -\dfrac{1}{4T}$ are useful for evaluating the errors of a QPSK modulator MR.

The power spectrum for the spectrum line of nil frequency (f = 0) is given by the relation:

$$\left|\widetilde{S}_{V_0 V_1 V_2 V_3}(0)\right|^2 = \frac{1}{16}\left|\rho_0 e^{j\varphi_0} + j\rho_1 e^{j\varphi_1} - \rho_2 e^{j\varphi_2} - j\rho_3 e^{j\varphi_3}\right|^2 \quad (12)$$

$$\# \frac{1}{16}\left[(\rho_2 - \rho_0)^2 + \rho_2\rho_0(\varphi_2 - \varphi_0)^2 + (\rho_3 - \rho_1)^2 + \rho_3\rho_1(\varphi_3 - \varphi_1)^2\right]$$

$$-\frac{2}{16}\left[\rho_1\rho_0(\varphi_1 - \varphi_0) + \rho_2\rho_1(\varphi_2 - \varphi_1) + \rho_3\rho_2(\varphi_3 - \varphi_2) + \rho_0\rho_3(\varphi_0 - \varphi_3)\right],$$

the power spectrum for the spectrum line of frequency $f = \dfrac{1}{4T}$ is given by the relation:

$$\left|\widetilde{S}_{V_0V_1V_2V_3}\left(\frac{1}{4T}\right)\right|^2 = \frac{1}{2\pi^2}\left|\rho_0 e^{j\varphi_0} + \rho_1 e^{j\varphi_1} + \rho_2 e^{j\varphi_2} + \rho_3 e^{j\varphi_3}\right|^2 \quad (13)$$

$$\# \frac{1}{2\pi^2 m^2}\left[(\rho_2+\rho_0)^2 - \rho_2\rho_0(\varphi_2-\varphi_0)^2 + (\rho_3+\rho_1)^2 - \rho_3\rho_1(\varphi_3-\varphi_1)^2\right]$$

$$+ \frac{1}{2\pi^2 m^2}\left[\begin{array}{l} 2(\rho_2+\rho_0)(\rho_3+\rho_1) - \rho_1\rho_0(\varphi_1-\varphi_0)^2 - \rho_2\rho_1(\varphi_2-\varphi_1)^2 \\[2mm] -\rho_3\rho_2(\varphi_3-\varphi_2)^2 - \rho_0\rho_3(\varphi_0-\varphi_3)^2 \end{array}\right],$$

the power spectrum for the spectrum line of frequency $f = \dfrac{2}{4T}$ is given by the relation:

$$\left|\widetilde{S}_{V_0V_1V_2V_3}\left(\frac{2}{4T}\right)\right|^2 = \frac{1}{\pi^2}\left|\rho_0 e^{j\varphi_0} - j\rho_1 e^{j\varphi_1} - \rho_2 e^{j\varphi_2} + j\rho_3 e^{j\varphi_3}\right|^2 \quad (14)$$

$$\# \frac{1}{\pi^2 m^2}\left[(\rho_2-\rho_0)^2 + \rho_2\rho_0(\varphi_2-\varphi_0)^2 + (\rho_3-\rho_1)^2 + \rho_3\rho_1(\varphi_3-\varphi_1)^2\right]$$

$$+ \frac{2}{\pi^2 m^2}\left[\rho_1\rho_0(\varphi_1-\varphi_0) + \rho_2\rho_1(\varphi_2-\varphi_1) + \rho_3\rho_2(\varphi_3-\varphi_2) + \rho_0\rho_3(\varphi_0-\varphi_3)\right],$$

and the power spectrum for the spectrum line of frequency $f = -\dfrac{1}{4T}$ is given by the relation:

$$\left|\widetilde{S}_{V_0V_1V_2V_3}\left(-\frac{1}{4T}\right)\right|^2 = \frac{1}{2\pi^2}\left|\rho_0 e^{j\varphi_0} - \rho_1 e^{j\varphi_1} + \rho_2 e^{j\varphi_2} - \rho_3 e^{j\varphi_3}\right|^2 \quad (15)$$

$$\# \frac{1}{2\pi^2 m^2}\left[(\rho_2+\rho_0)^2 - \rho_2\rho_0(\varphi_2-\varphi_0)^2 + (\rho_3+\rho_1)^2 - \rho_3\rho_1(\varphi_3-\varphi_1)^2\right]$$

$$- \frac{1}{2\pi^2 m^2}\left[\begin{array}{l} 2(\rho_2+\rho_0)(\rho_3+\rho_1) - \rho_1\rho_0(\varphi_1-\varphi_0)^2 - \rho_2\rho_1(\varphi_2-\varphi_1)^2 \\[2mm] -\rho_3\rho_2(\varphi_3-\varphi_2)^2 - \rho_0\rho_3(\varphi_0-\varphi_3)^2 \end{array}\right],$$

where $\rho_i$ is the amplitude and $\varphi_i$ the phase error of the plot $V_i$.

Figure 6 shows diagrammatically a graphical representation of the power spectrum $\left|\widetilde{S}_{V_0V_1V_2V_3}\left(\dfrac{m}{4T}\right)\right|^2$.

As indicated hereinabove, the processor module is responsible for determining the relative power of certain chosen spectrum lines of the spectrum of lines that results from each of the N sequences induced by the generator module MG (N being a function of the number of amplitude/phase plots of the modulation), and then for deducing from those relative powers estimates of the modulation error (here plot matching errors).

There is described in detail hereinafter one example of estimating plot matching errors on the basis of the three test sequences described hereinabove [$(V_0, V_2, V_0, V_2, V_0, ...)$, $(V_1, V_3, V_1, V_3, V_1, ...)$ and $(V_0, V_1, V_2, V_3, V_0, ...)$].

Using these three sequences it is possible to obtain five ratios of power of the two usable spectrum lines of the corresponding spectra, one with the sequence $(V_0, V_2, V_0, V_2, V_0, ...)$, one with the sequence $(V_1, V_3, V_1, V_3, V_1, ...)$ and three with the sequence $(V_0, V_1, V_2, V_3, V_0, ...)$.

Characterizing the matching of the four amplitude/phase plots necessitating the evaluation of six relative variables (or matching error parameters) [$\rho_2/\rho_0$, $\rho_3/\rho_1$, $\rho_3/\rho_2$, $(\varphi_2-\varphi_0)$, $(\varphi_3-\varphi_1)$ and $(\varphi_3-\varphi_2)$], direct calculation of these six relative variables is therefore impossible. The invention therefore proposes to make use of an indirect technique that consists in bounding (or upper bounding) the six relative variables cited above.

To this end, the processor module MT determines, for each combination of two amplitude/phase plots of each sequence, matching error parameter upper bounds that are functions of the ratio between the relative powers of two chosen spectrum lines in the spectrum resulting from the sequence corresponding to the combination, and then deduces from those upper bounds of matching error parameters the estimates of the matching error between the amplitude/phase plots of each combination.

More precisely, the spectrum associated with the sequence $(V_0, V_2, V_0, V_2, V_0, ...)$ is processed first.

The bound (or upper bound) of the ratio $\rho_2/\rho_0$ can be obtained by assuming pessimistically that the phase matching is perfect (i.e. that $\varphi_2 - \varphi_0 = 0$) and thus that only the amplitude matching is imperfect. In this case, starting from the ratio between the power spectra of the spectrum lines with frequencies f=0 and f=1/2T, given by the relations (6) and (7), it can be shown that, assuming $|\varphi_2 - \varphi_0| < 90°$, the following relation applies:

$$\frac{4}{\pi^2} \frac{\left|\widetilde{S}_{V_0 V_2}(0)\right|^2}{\left|\widetilde{S}_{V_0 V_2}\left(\dfrac{1}{2T}\right)\right|^2} > \frac{\left(\dfrac{\rho_2}{\rho_0}-1\right)^2}{\left(\dfrac{\rho_2}{\rho_0}+1\right)^2},$$

from which we deduce:

$$\frac{1-\dfrac{2}{\pi}K_{V_0 V_2}}{1+\dfrac{2}{\pi}K_{V_0 V_2}} < \frac{\rho_2}{\rho_0} < \frac{1+\dfrac{2}{\pi}K_{V_0 V_2}}{1-\dfrac{2}{\pi}K_{V_0 V_2}} \qquad (16)$$

where $K^2_{V_0 V_2} = \dfrac{\left|\widetilde{S}_{V_0 V_2}(0)\right|^2}{\left|\widetilde{S}_{V_0 V_2}\left(\dfrac{1}{2T}\right)\right|^2}$ .

Thereafter, the bound (or upper bound) of $|\varphi_2 - \varphi_0|$ can be obtained, for example, by minimizing the impact of the amplitude matching. To this end, starting from the ratio between the power spectra of the spectrum lines with frequencies f=0 and f=1/2T, given by relations (6) and (7), it can be shown that, on the hypothesis that $|\varphi_2 - \varphi_0| < 90°$, the following relation applies:

$$\frac{4}{\pi^2} \frac{\left|\widetilde{S}_{V_0 V_2}(0)\right|^2}{\left|\widetilde{S}_{V_0 V_2}\left(\dfrac{1}{2T}\right)\right|^2} > 4 \frac{\dfrac{\rho_2}{\rho_0}\left(\dfrac{\rho_2^2}{\rho_0^2}+1\right)}{\left(\dfrac{\rho_2}{\rho_0}+1\right)^4}\left(1-\cos(\varphi_2-\varphi_0)\right).$$

It is then possible either to reinject into the preceding relation the bound of $\dfrac{\rho_2}{\rho_0}$ supplied by relation (16) or to assume pessimistically that $\dfrac{1}{2} < \dfrac{\rho_2}{\rho_0} < 2$. Making this latter assumption, we deduce from the preceding relation:

$$|\varphi_2 - \varphi_0| < \arccos\left(1 - \frac{8,1}{\pi^2} K^2_{V_0 V_2}\right), \quad (17)$$

where $K^2_{V_0 V_2} = \dfrac{\left|\widetilde{S}_{V_0 V_2}(0)\right|^2}{\left|\widetilde{S}_{V_0 V_2}\left(\dfrac{1}{2T}\right)\right|^2}$.

The table below summarizes the various values of the bounds (or upper bounds) of the matching error parameters $\dfrac{\rho_2}{\rho_0}$ and $|\varphi_2 - \varphi_0|$ (given by relations (16) and (17)) that correspond to various examples of values of $10 \log_{10} K^2_{V_0 V_2}$ that represent the rejection.

| $10 \log_{10} K^2_{V_0 V_2}$ | bounds of $\dfrac{\rho_2}{\rho_0}$ (16) | bound of $|\varphi_2 - \varphi_0|$ (17) |
|---|---|---|
| -10 dB | min=0.66 max = 1.50 | <23.4° |
| -15 dB | min = 0.80 max=1.26 | <13.1° |
| -20 dB | min = 0.88 max=1.14 | < 7.4° |
| -24 dB | min = 0.92 max=1.08 | < 4.6° |
| -25 dB | min=0.93 max = 1.07 | <4.1° |
| -30 dB | min = 0.96 max = 1.04 | < 2.3° |

In this example, it can be seen that, allowing for a power ratio measurement error of at most 0.5 dB, a rejection of at least 24 dB is required to meet the specification $|\varphi_2 - \varphi_0| < 5°$.

The spectrum associated with the sequence $(V_1, V_3, V_1, V_3, V_1,...)$ is then processed. Given that, apart from the change of indices, the relations (9) and (10) of the spectra associated with the sequence $(V_1, V_3, V_1, V_3, V_1,...)$ are identical to the relations (6) and (7) of the spectra associated with the sequence $(V_0, V_2, V_0, V_2, V_0, ...)$, the bounds (or upper bounds) stemming from the sequence $(V_1, V_3, V_1, V_3, V_1,...)$ are given by the following relations:

$$\frac{1 - \dfrac{2}{\pi} K_{V_1 V_3}}{1 + \dfrac{2}{\pi} K_{V_1 V_3}} < \frac{\rho 3}{\rho 1} < \frac{1 + \dfrac{2}{\pi} K_{V_1 V_3}}{1 - \dfrac{2}{\pi} K_{V_1 V_3}} \quad (18)$$

On the hypothesis that $|\varphi_3 - \varphi_1| < 90°$, and where $K^2_{V_1 V_3} = \dfrac{\left|\widetilde{S}_{V_1 V_3}(0)\right|^2}{\left|\widetilde{S}_{V_1 V_3}\left(\dfrac{1}{2T}\right)\right|^2}$ ,

$$|\varphi_3 - \varphi_1| < \arccos\left(1 - \frac{8,1}{\pi^2} K^2_{V_1 V_3}\right) \quad (19)$$

assuming $\dfrac{1}{2} < \dfrac{\rho_3}{\rho_1} < 2$ .

As in the case of processing the sequence $(V_0, V_2, V_0, V_2, V_0,...)$, taking into account a power ratio measurement error of at most 0.5 dB, a rejection of at least 24 dB is required to meet the specification $|\varphi_3 - \varphi_1| < 5°$.

The spectrum associated with the sequence $(V_0, V_1, V_2, V_3, V_0,...)$ is then processed. If the following change of variables is effected:

$$\begin{cases} u = \rho_0 + \rho_2 e^{j(\varphi_2 - \varphi_0)} = |u| e^{j\varphi_u} \\ v = \rho_1 + \rho_3 e^{j(\varphi_3 - \varphi_1)} = |v| e^{j\varphi_v} \\ \phi = \varphi_1 - \varphi_0 \end{cases}$$

in the power spectra of the spectrum lines with frequencies $f = -\dfrac{1}{4T}$ and $f = \dfrac{1}{4T}$ given by relations (15) and (13), the following new relations are obtained:

$$\left|\widetilde{S}_{V_0 V_1 V_2 V_3}\left(-\frac{1}{4T}\right)\right|^2 = \frac{1}{2\pi^2}\left|u - e^{j\phi} v\right|^2 = \frac{1}{2\pi^2}\left\||u| - e^{j(\phi + \varphi_v - \varphi_u)}|v|\right\|^2$$

$$= \frac{1}{2\pi^2}\left\||u|^2 + |v|^2 - 2|u||v|\cos(\phi + \varphi_v - \varphi_u)\right\| \text{ , and}$$

$$\left|\widetilde{S}_{V_0 V_1 V_2 V_3}\left(\frac{1}{4T}\right)\right|^2 = \frac{1}{2\pi^2}\left|u + e^{j\phi} v\right|^2 = \frac{1}{2\pi^2}\left\||u| + e^{j(\phi + \varphi_v - \varphi_u)}|v|\right\|^2$$

$$= \frac{1}{2\pi^2}\left\||u|^2 + |v|^2 + 2|u||v|\cos(\phi + \varphi_v - \varphi_u)\right\| \text{ .}$$

The power ratio of the spectrum lines is then deduced from those new relations:

$$\frac{\left|\widetilde{S}_{V_0V_1V_2V_3}\left(-\dfrac{1}{4T}\right)\right|^2}{\left|\widetilde{S}_{V_0V_1V_2V_3}\left(\dfrac{1}{4T}\right)\right|^2}=\frac{|u|^2+|v|^2-2|u||v|\cos(\phi+\varphi_v-\varphi_u)}{|u|^2+|v|^2+2|u||v|\cos(\phi+\varphi_v-\varphi_u)}.$$

The bound of $|v|\,/\,|u|$ can be obtained by assuming pessimistically that $\phi + \varphi_v - \varphi_u = 0$ and making the hypothesis that $|\phi + \varphi_v - \varphi_u| < 90°$. It can in fact be shown that with this assumption and this hypothesis:

$$\frac{\left|\widetilde{S}_{V_0V_1V_2V_3}\left(-\dfrac{1}{4T}\right)\right|^2}{\left|\widetilde{S}_{V_0V_1V_2V_3}\left(\dfrac{1}{4T}\right)\right|^2}>\frac{\left(\dfrac{|v|}{|u|}-1\right)^2}{\left(\dfrac{|v|}{|u|}+1\right)^2},\quad(20)$$

from which the following condition is deduced:

$$\frac{1-K_{V_0V_1V_2V_3}}{1+K_{V_0V_1V_2V_3}}<\frac{|v|}{|u|}<\frac{1+K_{V_0V_1V_2V_3}}{1-K_{V_0V_1V_2V_3}}\quad(21)$$

where $K^2_{V_0V_1V_2V_3}=\dfrac{\left|S_{V_0V_1V_2V_3}\left(-\dfrac{1}{4T}\right)\right|^2}{\left|S_{V_0V_1V_2V_3}\left(\dfrac{1}{4T}\right)\right|^2}.$

Because in practice $|\varphi_2 - \varphi_0| < 90°$ and $|\varphi_3 - \varphi_1| < 90°$, then:

$$(\rho_0 + \rho_2)\cos\left(\frac{\varphi_2+\varphi_0}{2}\right)<|u|=\left|\rho_0+\rho_2 e^{j(\varphi_2-\varphi_0)}\right|<\rho_0 + \rho_2,$$

$$(\rho_1 + \rho_3)\cos\left(\frac{\varphi_3-\varphi_1}{2}\right)<|v|=\left|\rho_1+\rho_3 e^{j(\varphi_3-\varphi_1)}\right|<\rho_1 + \rho_3.$$

and
The inequality (20) can then be rewritten as follows:

$$\Gamma\frac{1-K_{V_0V_1V_2V_3}}{1+K_{V_0V_1V_2V_3}}<\frac{\rho_1+\rho_3}{\rho_0+\rho_2}<\frac{1}{\Gamma}\frac{1+K_{V_0V_1V_2V_3}}{1-K_{V_0V_1V_2V_3}}\quad(22)$$

where $\Gamma=cos(max(borne|\varphi_2-\varphi_0|,borne|\varphi_3-\varphi_1|)/2\#1$
The bounds (or upper bounds) of the matching error parameters $|\varphi_2 - \varphi_0|$ and $|\varphi_3-\varphi_1|$ used in the inequality (22) and more precisely in the expression for the parameter $\Gamma$ are respectively given by relations (17) and (18) corresponding to the processing of the spectra of the sequences ($V_0$, $V_2$, $V_0$, $V_2$, $V_0$, ...) and ($V_1$, $V_3$, $V_1$, $V_3$, $V_1$, ...).

The bound of $|\phi + \varphi_v - \varphi_u|$ is then determined, for example by minimizing the impact of the amplitude matching. To this end, starting again from the ratio given by relation (20), the following relation is obtained:

$$\frac{\left|\tilde{S}_{V_0V_1V_2V_3}\left(-\frac{1}{4T}\right)\right|^2}{\left|\tilde{S}_{V_0V_1V_2V_3}\left(\frac{1}{4T}\right)\right|^2} > 4 \frac{\frac{|v|}{|u|}\left(\frac{|v|^2}{|u|^2}+1\right)}{\left(\frac{|v|}{|u|}+1\right)^4} \ (1 - \cos(\phi + \varphi_v - \varphi_u)).$$

It is then possible either to reinject into the preceding relation the bound of $|v|/|u|$ supplied by the condition (21) or to assume pessimistically that $\frac{1}{2} < \frac{|v|}{|u|} < 2$. Making this latter assumption, it is deduced from the preceding relation that:

$$|\phi + \varphi_v - \varphi_u| < \arccos\left(1 - 2,025 K^2_{v0v1v2v3}\right) \quad (23).$$

Given that the condition $|\phi| < |\phi + \varphi_v - \varphi_u| + |\varphi_v| + |\varphi_u|$ applies and that the bound of $|\phi + \varphi_v - \varphi_u|$ is given by relation (23), it then remains to determine the bounds of $|\varphi_u|$ and $|\varphi_v|$ to obtain that of $|\phi|$. To this end, we start from the relation $u = \rho_0 + \rho_2 e^{j(\varphi2-\varphi0)} = |u|e^{j\varphi u}$ in which the imaginary components are therefore equal (i.e. $\rho_2 \sin(\varphi_2 - \varphi_0) = |u| \sin \varphi_u$).

Then, knowing that in practice $(\varphi_2 - \varphi_0) < 90°$, the foregoing equality in parentheses is rewritten $\sin(|\varphi_u|) = \frac{\rho_2}{|u|} \sin(|\varphi_2 - \varphi_0|)$ and we deduce from the definition of the variable u that $|u| > (\rho_0 + \rho_2) \cos\left(\frac{\varphi_2 - \varphi_0}{2}\right)$.

Combining the last equality and inequality we then obtain the inequality

$$|\varphi_u| < \arcsin\left(\frac{2\rho_2}{\rho_0+\rho_2}\sin\left(\frac{|\varphi_2-\varphi_0|}{2}\right)\right),$$ , for which the upper bounds of the matching error parameters $\frac{\rho_2}{\rho_0}$ (16)

and $|\rho_2 - \varphi_0|$ (17) are available thanks to the sequence ($V_0$, $V_2$, $V_0$, $V_2$, $V_0$, ...).

Using similar reasoning and the hypothesis that $(\varphi_3 - \varphi_1) < 90°$, it can be shown that we arrive at the inequality

$$|\varphi_v| < \arcsin\left(\frac{2\rho_3}{\rho_1+\rho_3}\sin\left(\frac{|\varphi_3-\varphi_1|}{2}\right)\right),$$ for which there are available the upper bounds of the matching error pa-

rameters $\frac{\rho_3}{\rho_1}$ (18) and $|\varphi_3 - \varphi_1|$ (19) thanks to the sequence ($V_1$, $V_3$, $V_1$, $V_3$, $V_1$, ...).

The upper bound of the matching error parameter $|\phi| = |\varphi_1 - \varphi_0|$ is then given by the relation:

$$|\phi| < |\phi + \varphi_v - \varphi_u| + arcsin\left(\frac{2\rho_2}{\rho_0+\rho_2}\sin\left(\frac{|\varphi_2-\varphi_0|}{2}\right)\right) + arcsin\left(\frac{2\rho_3}{\rho_1+\rho_3}\sin\left(\frac{|\varphi_3-\varphi_1|}{2}\right)\right) \quad (24).$$

It will be noted that the bound of $|\phi| = |\varphi_1 - \varphi_0|$ is "skewed" by, typically, the half-sum of the bounds (or upper bounds) of the matching error parameters $|\varphi_2 - \varphi_0|$ and $|\varphi_3 - \varphi_1|$ and therefore the estimate of the matching error parameter $|\phi|$ is typically half as accurate as that of the matching error parameters $|\varphi_2 - \varphi_0|$ or $|\varphi_3 - \varphi_1|$.

The table below summarizes the various values of the bounds (or upper bounds) of the matching error param-

eters $\dfrac{|v|}{|u|}$ and $|\phi + \varphi_v - \varphi_u|$ (given by relations (21) and (23)) that correspond to various examples of values of $10 \log_{10}$ $K^2_{V_0 V_1 V_2 V_3}$ that represent the rejection.

| $10 \log_{10} K^2_{V_0 V_1 V_2 V_3}$ | bounds of $\dfrac{|v|}{|u|}$ (21) | bound of $|\phi + \varphi_v - \varphi_u|$ (23) |
|---|---|---|
| -10dB | min = 0.52; max = 1.92 | <37.1˚ |
| -20 dB | min = 0.82 ; max = 1.22 | < 11.6˚ |
| -25 dB | min = 0.89 ; max = 1.12 | <6.5˚ |
| -30 dB | min = 0.94; max = 1.07 | <3.6˚ |

Given the values contained in the foregoing table, and if additionally, for example:

- 10 $\log_{10}$ $K^2_{V_0 V_2}$ = -25 dB, $\dfrac{\rho_2}{\rho_0}$ < 1.07 and $|\varphi_2 - \varphi_0| < 4.1˚$ (see the first table) and therefore arc sin

$$\left( \frac{2\rho_2}{\rho_0 + \rho_2} \sin \left( \frac{|\varphi_2 - \varphi_0|}{2} \right) \right) < 2{,}1°\ ,$$

- 10 $\log_{10}$ $K^2_{V_1 V_3}$ = -25 dB, $\dfrac{\rho_3}{\rho_1}$ < 1.07 and $|\varphi_3 - \varphi1| < 4.1˚$ (see the first table) and therefore arc sin

$$\left( \frac{2\rho_3}{\rho_1 + \rho_3} \sin \left( \frac{|\varphi_3 - \varphi_1|}{2} \right) \right) < 2{,}1°\ , \text{and}$$

- 10 $\log_{10}$ $K^2_{V_0 V_1 V_2 V_3}$ = -30 dB, $\dfrac{|v|}{|u|}$ < 1.07 and $|\phi + \varphi_v - \varphi_u| < 3.6˚$ (see the second table),

then the inequality (22) is rewritten $0.94 < \dfrac{\rho_1 + \rho_3}{\rho_0 + \rho_2} < 1.07$ and the inequality (24) is rewritten $|\phi| = |\varphi_1 - \varphi_0| < 7.7˚$.

It can be shown that the bound (or upper bound) of the matching error parameter $|\phi| = |\varphi_1 - \varphi_0|$ determined previously is equally applicable to the phase error parameters between the other adjacent plots, namely $|\varphi_2 - \varphi_1|$, $|\varphi_3 - \varphi_2|$ and $|\varphi_0 - \varphi_3|$. To this end, we begin by effecting the new changes of variable:

$$\begin{cases} u' = \rho_0 + \rho_2 e^{j(\varphi_2 - \varphi_0)} = |u'| e^{j\varphi_{u'}} \\ v' = \rho_3 + \rho_1 e^{j(\varphi_1 - \varphi_3)} = |v'| e^{j\varphi_{v'}} \\ \phi' = \varphi_3 - \varphi_0 \end{cases}$$

so that the spectrum line powers can be rewritten as follows:

$$\left|\widetilde{S}_{V_0V_1V_2V_3}\left(-\frac{1}{4T}\right)\right|^2 = \frac{1}{2\pi^2}\left|u'-e^{j\phi'}v'\right|^2$$

$$\left|\widetilde{S}_{V_0V_1V_2V_3}\left(\frac{1}{4T}\right)\right|^2 = \frac{1}{2\pi^2}\left|u'+e^{j\phi'}v'\right|^2.$$

Knowing that |u'| = |u| and |v'| = |v|, and repeating the previous calculations, we obtain the inequality |$\phi$'| < |$\phi$' + $\varphi_v$ - $\varphi_{u'}$| + |$\varphi_{v'}$| + |$\varphi_{u'}$| for which the first term (|$\phi$' + $\varphi_v$- $\varphi_{u'}$|) on the right-hand side has an upper bound given by relation (23), the second term (|$\varphi_v$|) on the right-hand side has an upper bound given by the relation |$\varphi_v$| < arc sin

$$\left(\frac{2\rho_1}{\rho_1+\rho_3}\sin\left(\left|\frac{\varphi_3-\varphi_1}{2}\right|\right)\right)$$ which is the same as that of |$\varphi_v$|, and the third term (|$\varphi_{v'}$|) on the right-hand side has an upper bound given by the relation |$\varphi_{u'}$| < arc sin $$\left(\frac{2\rho_2}{\rho_0+\rho_2}\sin\left(\left|\frac{\varphi_2-\varphi_0}{2}\right|\right)\right)$$ which is the same as that of |$\varphi_u$|.

Consequently |$\phi$'| = |$\varphi_3$ - $\varphi_0$| and |$\phi$| = |$\varphi_1$ - $\varphi_0$| have the same bound (or upper bound), which is given by relation (24).

It is shown in the same way that the matching error parameters |$\varphi_2$ - $\varphi_1$| and |$\varphi_3$ - $\varphi_2$| have a bound (or upper bound) in common with |$\phi$| = |$\varphi_1$ - $\varphi_0$|.

It results from the above that to determine the matching errors of the plots of a QPSK modulator MR, the generator module MG must, for example, generate successively at least three test sequences, for example ($V_0$, $V_2$, $V_0$, $V_2$, $V_0$, ...), ($V_1$, $V_3$, $V_1$, $V_3$, $V_1$, ...) and ($V_0$, $V_1$, $V_2$, $V_3$, $V_0$, ...). Remember, firstly, that the periodic sequences ($V_0$, $V_2$, $V_0$, $V_2$, $V_0$, ...) and ($V_1$, $V_3$, $V_1$, $V_3$, $V_1$, ...) are obtained by imposing E1 = 0 and E2 = 0 at the input of the modulator MR, more precisely of its differential coder module MC, the passage from one sequence to the other being effected by introducing, for example, a phase jump of $\pi$/2, i.e. a state E1 = 0 and E2 = 1 during a single period T of the clock H, and, secondly, that the periodic sequence ($V_0$, $V_1$, $V_2$, $V_3$, $V_0$, ...) is obtained by imposing E1= 0 and E2 = 1 at the input of the modulator MR, more precisely its differential coder module MC.

For its part, the processor module MT must:

- utilize the spectrum, delivered by the spectrum analyzer module MA in response to the generation of the periodic sequence ($V_0$, $V_2$, $V_0$, $V_2$, $V_0$, ...), to determine the relative powers of its spectrum lines at the frequencies 0 and 1/2T, then obtain the ratio of those relative powers to obtain an upper bound of the amplitude/phase error parameters between the opposite plots $V_0$ and $V_2$, knowing that the bounds of the matching error parameters $\rho_2/\rho_0$ and |$\varphi_2$ - $\varphi_0$| are given by relations (16) and (17),
- utilize the spectrum, delivered by the spectrum analyzer module MA in response to the generation of the periodic sequence ($V_1$, $V_3$, $V_1$, $V_3$, $V_1$, ...), to determine the relative powers of its spectrum lines at the frequencies 0 and 1/2T, and then to determine the ratio of those relative powers to obtain an upper bound of the amplitude/phase error parameters between the opposite plots $V_1$ and $V_3$, knowing that the bounds of the matching error parameters $\rho_3/\rho_1$ and |$\varphi_3$ - $\varphi_1$| are given by relations (18) and (19),
- utilize the spectrum, delivered by the spectrum analyzer module MA in response to the generation of the periodic sequence ($V_0$, $V_1$, $V_2$, $V_3$, $V_0$, ...), to determine the relative powers of its spectrum lines at the frequencies -1/4T and 1/4T, and then to determine the ratio of those relative powers to determine a unique upper bound of the amplitude/ phase error parameters between the adjacent plots, knowing that the bound of the matching error parameter ($\rho_1$ + $\rho_3$) / ($\rho_0$ + $\rho_2$) and the bound common to the matching error parameters |$\varphi_1$ - $\varphi_0$|, |$\varphi_2$ - $\varphi_1$|, |$\varphi_3$ - $\varphi_2$|, |$\varphi_0$ - $\varphi_3$| are given by relations (22) and (24).

Compliance with the specification for phase matching the opposite plots (i.e. |$\varphi_2$ - $\varphi_0$| < 5° and |$\varphi_3$ - $\varphi_1$| < 5°) is therefore assured when the processor module MT verifies that the relative power of the spectrum line at the frequency zero of the spectrum obtained with the sequence ($V_0$, $V_2$, $V_0$, $V_2$, $V_0$, ...) [respectively ($V_1$, $V_3$, $V_1$, $V_3$, $V_1$, ...)] is typically at least around 24 dB below that of the spectrum line at the frequency 1/2T of the spectrum obtained with that same sequence ($V_0$, $V_2$, $V_0$, $V_2$, $V_0$, ...) [respectively ($V_1$, $V_3$, $V_1$, $V_3$, $V_1$, ...)].

Compliance with the phase matching specification of the adjacent plots (|$\varphi_1$ - ($\varphi_0$|, |$\varphi_2$ - <$\varphi_1$|, |$\varphi_3$ - $\varphi_2$| and |$\varphi_0$

- $(\varphi_3)$ is assured under more complex conditions (described hereinabove) because the spectra of the three sequences are involved in the bounding of the phase error. One possible example of a set of conditions is as follows:

- the relative power of the spectrum line at the frequency zero of the spectrum obtained with each of the two sequences $(V_0, V_2, V_0, V_2, V_0, ...)$ and $(V_1, V_3, V_1, V_3, V_1, ...)$ must typically be at least around 30 dB below that of the spectrum line at the frequency 1/2T of the spectrum obtained with each of the same two sequences $(V_0, V_2, V_0, V_2, V_0, ...)$ and $(V_1, V_3, V_1, V_3, V_1, ...)$, and

- the relative power of the spectrum line at the frequency -1/4T of the spectrum obtained with the sequence $(V_0, V_1, V_2, V_3, V_0, ...)$ must typically be at least around 34 dB below that of the spectrum line at the frequency 1/4T of the spectrum obtained with that same sequence $(V_0, V_1, V_2, V_3, V_0, ...)$.

It is important to note that given that the bounding proposed hereinabove is severe, variations of a few dB can be envisaged for compliance with the matching conditions.

Moreover, there is described hereinabove one example of amplitude/phase plot matching testing based on the generation of three sequences $(V_0, V_2, V_0, V_2, V_0, ...)$, $(V_1, V_3, V_1, V_3, V_1, ...)$ and $(V_0, V_1, V_2, V_3, V_0, ...)$. Other combinations of sequences can be envisaged, however. Thus the four sequences $(V_0, V_2, V_0, V_2, V_0, ...)$, $(V_1, V_3, V_1, V_3, V_1,...)$, $(V_1, V_0, V_1, V_0, V_1, ...)$, and $(V_2, V_3, V_2, V_3, V_2, ...)$ could be used, in particular if the content is not filtered at the output of the modulator MR.

The test device D of the invention, and in particular its generator module MG, its spectrum analyzer module MA and its processor module MT, can be produced in the form of electronic circuits, software (or electronic data processing) modules, or a combination of circuits and software.

The invention is not limited to the test device and modulated signal generator equipment embodiments described hereinabove by way of example only, but encompasses all variants that the person skilled in the art might envisage within the scope of the following claims.

**Claims**

1. Device (D) for testing the quality of a modulation defined by so-called "amplitude/phase" plots and effected by a digital modulator (MR) having inputs adapted to receive periodic bit streams associated with a clock signal (H) and an output adapted to deliver a carrier modulated in phase and in quadrature respectively by said first and second bit stream, **characterized in that** it comprises i) generator means (MG) adapted to generate said clock signal and sets of chosen test bit streams each adapted to establish, in said digital modulator (MR), a set of at least two amplitude/phase plots of said modulation, ii) spectrum analyzer means (MA) adapted to transform into a spectrum of lines each carrier modulated with said test sets and delivered by the output of said digital modulator (MR), and iii) processor means (MT) adapted to determine the relative power of certain chosen spectrum lines of each spectrum of lines and to deduce from said relative powers estimates of errors of said modulation.

2. Device according to claim 1, **characterized in that** said processor means (MT) are adapted to estimate a matching error between two amplitude/phase plots of said modulation by determining upper bounds of matching error parameters as functions of the power ratio between at least two spectrum lines of the same spectrum corresponding to different predetermined frequencies.

3. Device according to either of claims 1 and 2, **characterized in that** said generator means (MG) are adapted to generate successively N sequences consisting of periodic series of different sets, and said processor means (MT) are adapted to determine the power ratio of certain chosen spectrum lines of the spectrum of lines resulting from each of said N sequences and to deduce from the power ratios, determined for the N successive sequences, estimates of errors of said modulation.

4. Device according to the combination of claims 2 and 3, **characterized in that** N is a function of the number of amplitude/phase plots of said modulation, and said processor means (MT) are adapted to determine, for each combination of at least two different amplitude/phase plots of said N sequences, the upper bounds of matching error parameters as functions of the power ratio between at least two chosen spectrum lines in the spectrum resulting from the sequence corresponding to said combination, and to deduce from those upper bounds matching error parameters of said estimates of matching errors between the amplitude/phase plots of each combination, and then for all the plots with each other.

5. Device according to claim 4, **characterized in that** in the presence of a BPSK type modulation defined by two amplitude/phase plots, said generator means (MG) are adapted to generate a single periodic sequence associated with a single possible combination of two different amplitude/phase plots, and said processor means (MT) are adapted to establish the matching error parameter upper bounds as functions of the power ratio between predetermined spectrum lines in the spectrum resulting from the sequence that corresponds to the combination.

6. Device according to any one of claims 2 to 4, **characterized in that** in the presence of a QPSK type modulation defined by four amplitude/phase plots (Vi), said generator means (MG) are adapted to generate at least three (N≥3) different sequences of periodic series of at least two sets adapted to establish different amplitude/phase plots.

7. Device according to claim 6, **characterized in that** said generator means (MG) are adapted to generate three (N=3) different sequences, a first sequence of periodic series of sets adapted to establish a first amplitude/phase plot (V0) and a third amplitude/phase plot (V2), a second sequence of periodic series of sets adapted to establish a second amplitude/phase plot (V1) and a fourth amplitude/phase plot (V3), and a third sequence of periodic series of sets adapted to establish said first amplitude/phase plot (V0), said second amplitude/phase plot (V1), said third amplitude/phase plot (V2) and said fourth amplitude/phase plot (V3).

8. Device according to claim 7, **characterized in that** said processor means (MT) are adapted to determine i) the relative powers of two spectrum lines of the spectrum resulting from said first sequence and corresponding to the frequencies 0 and 1/2T, where T is the timing rate of said clock H, ii) the relative powers of two spectrum lines of the spectrum resulting from said second sequence and corresponding to the frequencies 0 and 1/2T, and iii) the relative powers of two spectrum lines of the spectrum resulting from said third sequence and corresponding to the frequencies -1/4T and 1/4T.

9. Device according to claim 7, **characterized in that** said generator means (MG) are adapted to generate four (N=4) different sequences, a first sequence of periodic series of sets adapted to establish a first amplitude/phase plot (V0) and a third amplitude/phase plot (V2), a second sequence of periodic series of sets adapted to establish a second amplitude/phase plot (V1) and a fourth amplitude/phase plot (V3), a third sequence of periodic series of sets adapted to establish said first amplitude/phase plot (V0) and said second amplitude/phase plot (V1), and a fourth sequence of periodic series of sets adapted to establish said third amplitude/phase plot (V2) and said fourth amplitude/phase plot (V3).

10. Device according to claim 7, **characterized in that** said processor means are adapted to determine i) the relative powers of two spectrum lines of the spectrum resulting from said first sequence and corresponding to the frequencies 0 and 1/2T, where T is the timing rate of said clock (H), ii) the relative powers of two spectrum lines of the spectrum resulting from said second sequence and corresponding to the frequencies 0 and 1/2T, iii) the relative powers of two spectrum lines of the spectrum resulting from said third sequence and corresponding to the frequencies 0 and 1/2T, and iv) the relative powers of two spectrum lines of the spectrum resulting from said second sequence and corresponding to the frequencies 0 and 1/2T.

11. Device according to any one of claims 2 to 10, **characterized in that** said matching error parameters are an amplitude ratio and a phase difference of pairs of amplitude/phase plots of said modulation.

12. Device according to claim 1, **characterized in that** said processor means (MT) are adapted to estimate a time offset error between quadrature and in-phase modulation channels of said digital modulator (MR) from relative powers of certain chosen spectrum lines of said spectrum of lines.

13. Device according to claim 1, **characterized in that** said processor means (MT) are adapted to estimate an asymmetry error between bit rise times and fall times from the relative powers of certain chosen spectrum lines of said spectrum of lines.

14. Equipment (EG) for generating modulated radio-frequency signals, **characterized in that** it comprises at least one digital modulator (MR) coupled to a test device (D) according to any one of the preceding claims.

15. Equipment according to claim 14, **characterized in that** it constitutes a system for transmission of modulated radio-frequency signals.

16. Spacecraft, **characterized in that** it comprises equipment (EG) according to either of claims 14 and 15 for generating modulated radio-frequency signals.

MR          EG

E1$_n$

S(t)          S(f)

E2$_n$

H

MG          MA          MT

D

FIG.1

IA          M

H

$\alpha_n$          I

E1$_n$

OL          MS

M1

E2$_n$          90°          S(t)

DP          Q

MG          $\beta_n$          M2

MC

IS

FIG.2

FIG.3

FIG.4

FIG.5

FIG.6

**European Patent Office**

## EUROPEAN SEARCH REPORT

Application Number

EP 07 11 6055

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/041754 A1 (WU KUO-MING [TW] ET AL) 24 February 2005 (2005-02-24) <br> * figures 1,2 * <br> * paragraphs [0005], [0048] * <br> * paragraphs [0050] - [0091] * <br> ----- | 1-7,9, 11-16 | INV. <br> H04L27/36 |
| X | FR 2 785 111 A1 (ST MICROELECTRONICS SA [FR]) 28 April 2000 (2000-04-28) <br> * figure 1 * <br> * page 8, line 10 - page 11, line 27 * <br> ----- | 1-7,9, 11-16 | |
| A | EP 0 843 448 A (ALSTHOM CGE ALCATEL [FR]) 20 May 1998 (1998-05-20) <br> * figures 6,7 * <br> * page 4, line 43 - page 6, line 16 * <br> ----- | 1,14,16 | |

| | | | TECHNICAL FIELDS SEARCHED (IPC) |
|---|---|---|---|
| | | | H04L <br> H04B |

The present search report has been drawn up for all claims

| Place of search | Date of completion of the search | Examiner |
|---|---|---|
| Berlin | 11 January 2008 | Chave, Julien |

EPO FORM 1503 03.82 (P04C01)

**ANNEX TO THE EUROPEAN SEARCH REPORT
ON EUROPEAN PATENT APPLICATION NO.**

EP 07 11 6055

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2008

| Patent document cited in search report | | Publication date | Patent family member(s) | | Publication date |
|---|---|---|---|---|---|
| US 2005041754 | A1 | 24-02-2005 | TW | 241095 B | 01-10-2005 |
| FR 2785111 | A1 | 28-04-2000 | EP 1125411 A1<br>WO 0025494 A1<br>US 6393258 B1 | | 22-08-2001<br>04-05-2000<br>21-05-2002 |
| EP 0843448 | A | 20-05-1998 | CA 2218925 A1<br>FR 2755808 A1<br>JP 10164159 A<br>NO 975224 A<br>US 5883551 A | | 14-05-1998<br>15-05-1998<br>19-06-1998<br>15-05-1998<br>16-03-1999 |

EPO FORM P0459

For more details about this annex : see Official Journal of the European Patent Office, No. 12/82